# EUROPÄISCHE PATENTSCHRIFT

(11) **EP 1 446 593 B1**
(45) Veröffentlichungstag und Bekanntmachung des Hinweises auf die Patenterteilung: **23.04.2008**
(21) Anmeldenummer: 02779312.4
(22) Anmeldetag: 05.09.2002
(51) Int. Cl.: F16H 7/08

(54) **SPANNVORRICHTUNG F R EIN ENDLOSTREIBELEMENT**
CLAMPING DEVICE FOR AN ENDLESS DRIVE ELEMENT
DISPOSITIF TENDEUR POUR ELEMENT DE TRANSMISSION SANS FIN

(30) Priorität: 20.11.2001 DE 20118900 U
(43) Veröffentlichungstag der Anmeldung: 18.08.2004
(73) Patentinhaber: JOH. WINKLHOFER & SÖHNE GmbH & Co KG, D-81369 München (DE)
(72) Erfinder: PREIS, Artur, 82110 Germering (DE); BACHMAIR, Peter, 81371 München (DE)
(74) Vertreter: Grünecker, Kinkeldey, Stockmair & Schwanhäusser Anwaltssozietät
(86) Internationale Anmeldenummer: PCT/EP2002/009952
(87) Internationale Veröffentlichungsnummer: WO 2003/044393

(56) Entgegenhaltungen:
- EP-A- 0 846 891
- DE-A- 4 340 865
- DE-A- 19 702 992
- DE-A- 19 923 905
- US-A- 5 253 577
- FITTS BRUCE B ET AL: "Advanced moldable phenolic composites" THERMOSETS '90;ROSEMONT, IL, USA MAR 20-22 1990, 1990, Seiten 143-154, XP008010329 Thermosets 90 1990 Publ by Soc of Plastics Engineers, Brookfield, CT, USA
- "main applications in the automotive industry" VYNCOLIT-AUTOMOTIVE, [Online] XP002219860 Gefunden im Internet: <URL:http://www.vyncolit.com/EN/3Applicati ons/31Automotive/automotive.htm> [gefunden am 2002-11-07]

## Beschreibung

Die vorliegende Erfindung betrifft eine Spannvorrichtung für ein Endlostreibelement, insbesondere Steuerkette eines Verbrennungsmotors, mit einem Gehäuse und einem im Gehäuse bewegbar angeordneten Spannkolben.

Insbesondere bei Steuerkettentrieben bei einem Verbrennungsmotors ist es üblich, zumindest einseitig eine Spannschiene gegen die Kette zu drücken. Die Spannkraft wird über einen Kettenspanner aufgebracht, der auf einen dafür geeignet ausgestalteten Bereich der Spannschiene aufdrückt. Ein Teil solcher Kettenspanner ist an den Motorölhydraulikkreislauf angeschlossen, so dass im Betrieb die Spannkraft sowie die hydraulische Dämpfung durch geeignete Ausgestaltung des Kettenspanners aufgrund der hydraulischen Druckverhältnisse im Kettenspanner erzielt wird. Ein Spannkolben, der in einem Gehäuse geführt ist, wird an seiner Rückseite mit einer Hydraulikkraft beaufschlagt. Das bedeutet, dass je höher die Drehzahl des Motors ist, desto höher ist auch die Spannkraft. Aber auch hier gibt es geeignete Konstruktionen, die dies in gewünschter Weise steuern oder die Kraft nach oben hin begrenzen. Des weiteren ist in den meisten Fällen eine Feder vorgesehen, die zumindest zum Zeitpunkt eines noch nicht ausreichend aufgebauten Hydraulikdrucks eine gewisse Mindestvorspannung bereit hält. Der Spannkolben ist aufgrund der vorherrschenden Druckkräfte bevorzugt aus einem Stahlwerkstoff hergestellt, während das Gehäuse aus Aluminiumdruckguss besteht. Es gibt jedoch auch Bauformen, denen eine Stahlführungshülse für den Spannkolben von einem Kunststoffgehäuse aus Thermoplast umspritzt wird. Viele der bekannten Spannvorrichtungsbauformen haben sich im Einsatz sehr gut bewährt. Jedoch bestehen weiterhin Bestrebungen bei Beibehaltung der gewünschten Haltbarkeit eine Kostenreduktion herbeizuführen.

Aus der DE 1 932 3905 ist eine Spanneinrichtung mit den Merkmalen des Oberbegriffes des Anspruches 1 bekannt.

Diese Aufgabe wird erfingdungsgemäß durch den kennzeichnenden Teil des Anspruches 1 gelöst. Auf den ersten Blick erscheint es verwunderlich, warum Duroplastwerkstoffe bislang für derartige Einsatzzwecke nicht herangezogen wurden. Voraussichtlich war die Fachwelt der Meinung, dass in der Druckkammer, in der der Spannkolben geführt ist, so hohe Kräfte auftreten, dass eine ausreichende Stabilität nur über Metallwerkstoffe bereitzustellen war. Neben den gewünschten Festigkeitseigenschaften sorgt der Duroplastwerkstoff auch eine Reduktion des Gewichts und der Herstellkosten. Auch dieser kann durch die geeignete Wahl des Duroplastwerkstoffes optimal an sein Einsatzzweck angepasst werden.

Gunstigerweise kann der Spannkolben vollständig aus Duroplastwerkstoff bestehen. Demnach werden weitere Elemente, wie z.B. ein Andrückstück etc. ebenfalls aus dem Duroplastwerkstoof geformt.

Auch zumindest die Hauptoberflächen des Spannkolbens können nachbearbeitungsfrei durch einen Duroplastformvorgang ausgestaltet sein. Durch den Duroplastformvorgang lassen sich insbesondere die für die notwendige Gleibewegung sehr gute Oberflächen herstellen.

Es besteht auch die Möglichkeit, dass das Gehäuse zumindest bereichsweise aus mindestens einem Duroplastwerkstoff besteht.

Insbesondere eignen sich Duroplastwerkstoffe sehr gut, um aneinander entlang zu gleiten, wie hier das Gehäuse und der Spannkolben. Es soll an dieser Stelle jedoch verstanden sein, dass es prinzipiell möglich ist, eine Spannvorrichtung mit Gehäuse und einem Spannkolben aus einem Duroplastwerstoff bereitzustellen, bei dem das Gehäuse auch aus einem anderen Werkstoff besteht.

Das Gehäuse kann auch vollständig aus Duroplastwerkstoff bestehen. Demmach werden weitere Elemente wie z.B. Befestigungsösen etc. ebenfalls aus einem solchen Werkstoff geformt. Auch Betätigungsgewinde sind so formbar. Versuche haben gezeigt, dass sich Duroplastwerstoffe für solche Einsatzzwecke sehr gut eignen und dass es generell nicht wie bei Thermoplasten notwendig ist, eine Verstärkungshüle einzusetzen.

Bei einer Ausführungsform sind die Oberflächen des Gehäuses nachbearbeitungsfrei nur durch einen Duroplastformvorgang ausgestaltet. Das Gehäuse wird durch diese Vorgabe fertig aus der Form entnommen und es ist kein weiterer Bearbeitungsschritt zur Formgebung erforderlich.

Als besonderer Vorteil ist die Vorgabe gemäß einer Ausführungsform anzusehen, bei der das Gehäuse und der Spannkolben im wesentlichen den gleichen Wärmeausdehnungskoeffizienten aufweisen. Hierdurch sind keine zusätzlichen Maßnahmen erforderlich, die für einen geeigneten Ausgleich sorgen. Die Vergrößerung oder Schrumpfung des Gehäuses und des Spannkolbens laufen dann gleichmäßig zueinander ab.

Bevorzugt kann der mindestens eine Duroplastwerkstoff ein Kunststoff auf Phenolharzbasis mit mindestens einem Füllstoff serin. Duroplastwerkstoffe auf Phenolharzbasis sind für den Haupteinsatzzweck im Steuerkettentrieb eines Verbrennungsmotors sehr gut geeignet und halten den dort vorgegebenen Belastungen hinsichtlich Schmierstoff- und Wärmeeinflüssen stand.

Insbesondere kann mindestens ein Duroplastwerkstoff eine hohe Wärmebeständigkeit bis mindestens 140°C, bevorzugt 160°C, aufweisen. Hiermit ist gemeint, dass der Duroplast einschließlich seiner eventuell vorhandenen Füllstoffe auch bei höheren Temperaturen (z.B. bei 140°C) seine hohen mechanischen Eigenschaften (z.B. Druckfestigkeit, Biegefestigkeit) beibehält. Diese mechanischen Eigenschaften können in Größenordnungen von Aluminiumwerkstoffen liegen. Thermoplaste fangen bei solchen Temperaturen das Fließen an, so dass entsprechende Gegenmaßnahmen getroffen werden müssen. Diese entfallen bei der Verwendung von Duroplastwerkstoffen. Generell sind die hier vorgeschlagenen Duroplastwerkstoffe mechanisch hoch belastbar, und zwar weit oberhalb von Belastungswerten, die durch Thermoplastwerkstoffe möglich sind.

Des Weiteren besteht die Möglichkeit, dass der mindestens eine Füllstoff aus der folgenden Gruppe ausgewählt ist:

Glasfasern, Glaskugeln, Mineralstoffe, Graphit, PTFE (Teflon) und MoS₂.

Auch Kombinationen dieser Füllstoffe sind in vorgegebenen Mischungsverhältnissen denkbar. Z.B. kann der Duroplastwerkstoff so gewählt werden, dass sich eine Reibungsreduktion oder eine höhere Festigkeit ergibt. Dies kann auch nur bereichsweise an den Bauteilen durch bewusste Beeinflussung des Materials an der jeweiligen Stelle geschehen.

Es besteht auch die Möglichkeit, dass das Gehäuse und der Spannkolben aus dem gleichen Werkstoff bestehen.

Aus Duroplastwerkstoff kann ein Werkstoff aus der folgenden Gruppe ausgewählt werden:

| |
|---|
| X 620 |
| X 655 |
| X 659 |
| X 680 |
| X 681 |
| X 682 |
| X 689 |
| X 6952 (Hersteller: Fa. Vyncolit) |

Die von dieser Firma unter der angegebenen Produktbezeichnung vertriebenen Duroplastwerkstoffe eignen sich hervorragend für Spannvorrichtungen, insbesondere Kettenspanner, die bei einem Steuerkettentrieb eines Verbrennungsmotors eingesetzt werden.

Im folgenden wird anhand einer Zeichnung ein Ausführungsbeispiel der vorliegenden Erfindung näher erläutert.

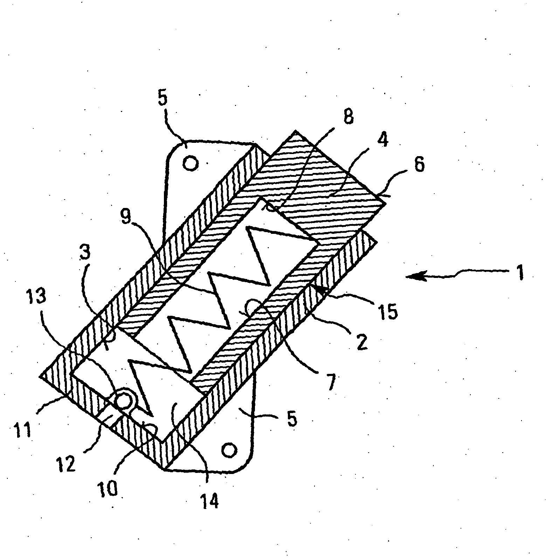

Der in der Figur dargestellte Kettenspanner 1 umfasst ein Gehäuse 2, mit einer Aufnahmebohrung 3 für einen darin verschiebbar geführten Spannkolben 4. Sowohl der Spannkolben 4 als auch die Aufnahmebohrung 3 sind zylinderförmig ausgestaltet. An dem Gehäuse 2 sind Befestigungsaufnahmen 5 vorgesehen, mit denen der Kettenspanner 1 am Motorgehäuse anschraubbar ist. Mit seiner Antriebfläche 6 drückt der Kettenspanner 1 gegen eine nicht näher dargestellte Spannschiene, die wiederum gegen eine Steuerkette eines Verbrennungsmotors gedrückt wird. Auf der Rückseite des Spannkolbens 4 befindet sich eine nicht durchgehende Zylinderbohrung 7, an deren Grundfläche 8 sich eine Schraubendruckfeder 9 abstützt. Diese Schraubendruckfeder 9 stützt sich an ihrem anderen Ende an dem Grund 10 der Aufnahmebohrung 3 ab. In dem Boden 11 des Gehäuses 2 ist eine Einlassbohrung 12 eingearbeitet, die über ein Rückschlagventil 13 mit der Druckkammer 14 in Verbindung steht.

Bei dem vorliegenden Ausführungsbeispiel sind sowohl der Spannkolben 4 als auch das Gehäuse 2 jeweils aus einem Duroplastwerkstoff hergestellt. Im vorliegenden Fall werden unterschiedliche Duroplastwerkstoffe eingesetzt. Der Spannkolben besteht aus einem X 659 und das Gehäuse aus einem X 689. Beide Duroplastwerkstoffe sind unter dieser Produktbezeichnung von der Firma Vyncolit (Gent, Belgien) beziehbar. Es besteht aber durchaus die Möglichkeit, beide Elemente aus dem gleichen Duroplastwerkstoff herzustellen. Auch die Verwendung von Werkstoffen mit dem gleichen Wärmeausdehnungskoeffizient kann erfolgen.

Beim Duroplastformvorgang wird darauf geachtet, dass die Oberflächen des Gehäuses 2 und des Spannkolbens 4 nach diesem Formvorgang fertiggestellt und nicht nachbearbeitet werden müssen. Insbesondere ein spanendes Nachbearbeiten soll nicht mehr erfolgen. Prinzipiell besteht auch die Möglichkeit, eines dieser beiden Elemente, entweder das Gehäuse 2 oder den Spannkolben 4 auch aus einem anderen Werkstoff, z.B. einem Stahlwerkstoff herzustellen.

Im folgenden wird die Wirkungsweise des Kettenspanners 1 kurz erläutert.

Die Einlassbohrung 12 ist an den Motorölkreislauf des Verbrennungsmotors angeschlossen. Bei Starten des Motors fließt Öl über die Einlassbohrung 12 und das in dieser Richtung öffnende Rückschlagventil 13 in die Druckkammer 14 ein. Das an der Rückseite des Spannkolbens 4 wirkende Öl, drückt den Spannkolben 4 in seine Spannposition. Anfänglich erfolgt dies durch die Druckfeder 9. Im Betrieb ist jedoch der Hydraulikdruck so groß, dass die Federkraft kaum eine Rolle spielt. Eine Dämpfung wird dadurch erzielt, dass das Rückschlagventil 13 schließt, sobald der Druck in der Druckkammer 14 größer wird, als der Druck im Motorölkreislauf. Ein Abbau des Druckes erfolgt über den Leckagespalt 15, der aufgrund der (geringen) Spielführung zwischen dem Spannkolben 4 und dem Gehäuse 2 noch vorhanden ist.

Die gewählten Duroplastwerkstoffe sorgen für eine leichtbauende Variante, die den hier vorherrschenden Belastungen bei einem Steuerkettentrieb gerecht wird.

## Patentansprüche

1. Spannvorrichtung (1) für ein Endlostreibelement, insbesondere Steuerkette eines Verbrennungsmotors, mit einem Gehäuse (2) und einem im Gehäuse (2) bewegbar angeordneten Spannkolben (1), **dadurch gekennzeichnet, dass** der Spannkolben (4) zumindest bereichsweise aus mindestens einem Duroplastwerkstoff hergestellt ist und zumindest die für die Gleitbewegung notwendigen Hauptoberflächen des Spannkolbens (4) nachbearbeitungsfrei nur durch einen Duroplastformvorgang ausgestaltet sind.

2. Spannvorrichtung (1) nach Anspruch 1, **dadurch gekennzeichnet, dass** der Spannkolben (4) vollständig aus Duroplastwerkstoff besteht.

3. Spannvorrichtung (1) nach Anspruch 1 oder 2, **dadurch gekennzeichnet, dass** das Gehäuse (2) zumindest bereichsweise aus mindestens einem Duroplastwerkstoff hergestellt ist und die Oberflächen der Aufnahmebohrung (3) des Gehäuses (2) nachbearbeitungsfrei durch einen Duroplastformvorgang ausgestaltet sind.

4. Spannvorrichtung (1) nach Anspruch 3, **dadurch gekennzeichnet, dass** das Gehäuse (2) vollständig aus Duroplastwerkstoff besteht.

5. Spannvorrichtung (1) nach einem der Ansprüche 1 bis 4. **dadurch gekennzeichnet, dass** der Spannkolben (4) und das Gehäuse (2) im Wesentlichen den gleichen Wärmeausdehnungskoeffizienten aufweisen.

6. Spannvorrichtung (1) nach Anspruch 5, **dadurch gekennzeichnet, dass** der Spannkolben (4) und das Gehäuse (2) aus dem gleichen Werkstoff bestehen.

7. Spannvorrichtung (1) nach einem der Ansprüche 1 bis 6, **dadurch gekennzeichnet, dass** der mindestens eine Duroplastwerkstoff ein Kunststoff auf Phenolharzbasis mit mindestens einem Füllstoff ist.

8. Spannvorrichtung (1) nach Anspruch 7, **dadurch gekennzeichnet, dass** der mindestens eine Duroplastwerkstoff eine hohe Wärmebeständigkeit bis mindestens 140°C, bevorzugt 160°C, aufweist.

9. Spannvorrichtung (1) nach Anspruch 7 oder 8, **dadurch gekennzeichnet, dass** der mindestens eine Füllstoff aus der folgenden Gruppe ausgewählt ist:
Glasfasern
Glaskugeln
Mineralstoffe
Graphit
PTFE
MoS₂.

## Claims

1. Tensioning device (1) for an endless drive element, in particular a timing chain of an internal combustion engine, with a housing (2) and a tensioning piston (1) movably arranged in the housing (2), **characterized in that** the tensioning piston (4) is produced at least in certain portions from at least one thermoset material and at least the main surfaces of the tensioning piston (4) that are necessary for the sliding movement are formed only by a thermoset moulding operation, without requiring any secondary finishing.

2. Tensioning device (1) according to Claim 1, **characterized in that** the tensioning piston (4) consists completely of thermoset material.

3. Tensioning device (1) according to Claim 1 or 2, **characterized in that** the housing (2) is produced at least in certain regions from at least one thermoset material and the surfaces of the receiving bore (3) of the housing (2) are formed by a thermoset moulding operation, without requiring any secondary finishing.

4. Tensioning device (1) according to Claim 3, **characterized in that** the housing (2) consists completely of thermoset material.

5. Tensioning device (1) according to one of Claims 1 to 4, **characterized in that** the tensioning piston (4) and the housing (2) have substantially the same coefficient of thermal expansion.

6. Tensioning device (1) according to Claim 5, **characterized in that** the tensioning piston (4) and the housing (2) consist of the same material.

7. Tensioning device (1) according to one of Claims 1 to 6, **characterized in that** the at least one thermoset material is a plastic based on phenolic resin with at least one filler.

8. Tensioning device (1) according to Claim 7, **characterized in that** the at least one thermoset material has a high heat resistance of up to at least 140°C, with preference 160°C.

9. Tensioning device (1) according to Claim 7 or 8, **characterized in that** the at least one filler is selected from the following group:
glass fibres
glass beads
mineral substances
graphite
PTFE
MoS₂.

## Revendications

1. Dispositif de tension (1) pour un élément d'entraînement sans fin, en particulier pour une chaîne de distribution d'un moteur à combustion interne, comprenant un boîtier (2) et un piston tendeur (1) disposé de façon à pouvoir se déplacer dans le boîtier (2), **caractérisé en ce que** le piston tendeur (4) est fabriqué au moins en partie dans au moins un matériau thermodurcissable et **en ce qu'**au moins les surfaces principales du piston tendeur (4) nécessaires au mouvement coulissant sont réalisées sans reprise d'usinage, uniquement par une opération de formage du matériau thermodurcissable.

2. Dispositif de tension (1) selon la revendication 1, **caractérisé en ce que** le piston tendeur (4) est entièrement fabriqué en matériau thermodurcissable.

3. Dispositif de tension (1) selon la revendication 1 ou la revendication 2, **caractérisé en ce que** certaines parties au moins du boîtier (2) sont fabriquées dans au moins un matériau thermodurcissable et **en ce que** les surfaces du logement (3) percé dans le boîtier (2) sont réalisées sans reprise d'usinage, uniquement par une opération de formage du matériau thermodurcissable.

4. Dispositif de tension (1) selon la revendication 3, **caractérisé en ce que** le boîtier (2) est entièrement fabriqué en matériau thermodurcissable.

5. Dispositif de tension (1) selon l'une des revendications 1 à 4, **caractérisé en ce que** le piston tendeur (4) et le boîtier (2) présentent des coefficients de dilatation thermique sensiblement identiques.

6. Dispositif de tension (1) selon la revendication 5, **caractérisé en ce que** le piston tendeur (4) et le boîtier (2) sont fabriqués dans le même matériau.

7. Dispositif de tension (1) selon l'une des revendications 1 à 6, **caractérisé en ce que** ledit au moins un matériau thermodurcissable est une matière plastique à base de résine phénolique contenant au moins une matière de charge.

8. Dispositif de tension (1) selon la revendication 7, **caractérisé en ce que** ledit au moins un matériau thermodurcissable présente une tenue en température élevée allant jusqu'à au moins 140°C, de préférence jusqu'à 160°C.

9. Dispositif de tension (1) selon la revendication 7 ou la revendication 8, **caractérisé en ce que** ladite au moins une matière de charge est choisie dans le groupe suivant :
Fibres de verres
Billes de verre
Matières minérales
Graphite
PTFE
MoS₂.
